# EUROPEAN PATENT SPECIFICATION

(11) **EP 3 988 336 B1**
(45) Date of publication and mention of the grant of the patent: **06.12.2023**
(21) Application number: 21194645.4
(22) Date of filing: 02.09.2021
(51) Int. Cl.: B60C 11/03, B60C 11/13

(54) **TIRE**
REIFEN
PNEUMATIQUE

(30) Priority: 20.10.2020 JP 2020176231
(43) Date of publication of application: 27.04.2022
(73) Proprietor: Sumitomo Rubber Industries, Ltd., Kobe-shi, Hyogo-ken 651-0072 (JP)
(72) Inventor: NAGASAWA, Koki, Kobe-shi, Hyogo, 651-0072 (JP)
(74) Representative: Manitz Finsterwald Patent- und Rechtsanwaltspartnerschaft mbB

(56) References cited:
- EP-A1- 2 913 204
- EP-A1- 3 081 398
- EP-A2- 2 465 706
- US-A- 5 361 816
- US-A1- 2018 370 290
- US-A1- 2019 118 584

## Description

### [Technical Field]

The present invention relates to a tire.

### [Background Art]

Patent Document 1 listed below has proposed a tire having a center land region and middle land regions provided with a plurality of lateral grooves. The above-described tire is expected to improve steering stability while suppressing decrease in on-ice/on-snow performance by these lateral grooves. Related technologies are also known from EP 3 081 398 A1, EP 2 913 204 A1, EP 2 465 706 A2, US 2018/370290 A1, US 5 361 816 A, and US 2019/118584 A1.

### [Prior Art Document]

### [Patent Document]

[Patent Document 1]
Japanese Unexamined Patent Application Publication No. 2017-056814

### [Summary of the Invention]

### [Problems to be solved by the Invention]

In general, there is a tendency in tires designed for running on snow that the tread portion is provided with circumferential grooves extending continuously in a tire circumferential direction and lateral grooves inclined with respect to a tire axial direction. During running on snowy roads, the above tire compresses the snow in the circumferential grooves and the lateral grooves and shears the compressed snow to generate snow shearing force to ensure on-snow performance.

In order to increase the snow shearing force, the number of intersections between the circumferential grooves and the lateral grooves can be increased, or the volume of these grooves can be increased. However, it is possible that such methods lead to deterioration of noise performance. On the other hand, in recent years, the level of demand for tire performance has been increasing, and even tires designed for running on snowy roads are required to have improved noise performance.

The present invention was made in view of the above, and a primary object thereof is to provide a tire having improved noise performance while maintaining the on-snow performance.

### [Means for Solving the Problems]

The present invention is set out in the appended claims. The present disclosure is a tire including a tread portion, wherein the tread portion includes a plurality of circumferential grooves extending continuously in a tire circumferential direction between a first tread edge and a second tread edge, and a plurality of land regions demarcated by the circumferential grooves, the land regions include a crown land region and a first middle land region adjacent to the crown land region on the first tread edge side with one of the circumferential grooves therebetween, the crown land region is provided with a plurality of crown lateral grooves inclined to a first side with respect to a tire axial direction and completely cross the crown land region in the tire axial direction, the first middle land region is provided with a plurality of first middle lateral grooves inclined to a second side opposite to the first side with respect to the tire axial direction and completely cross the first middle land region in the tire axial direction, in a tread plan view, an angle between a first linear line connecting both ends of each of the crown lateral grooves and a second linear line connecting both ends of a respective one of the first middle lateral grooves is 90 degrees or more and 150 degrees or less, each of the crown lateral grooves includes a first end portion and a second end portion in the tire axial direction, and a center portion arranged between the first end portion and the second end portion, and the center portion has a groove width smaller than a groove width of the first end portion and a groove width of the second end portion.

### [Effects of the Invention]

By adopting the above configuration, the tire of the present invention can improve the noise performance while maintaining the on-snow performance.

### [Brief Description of the Drawings]

[Figure 1] a development view of a tread portion of a tire according to an embodiment of the present invention.
[Figure 2] an enlarged view of a crown land region and a first middle land region of Figure 1.
[Figure 3] an enlarged view of one of crown lateral grooves and one of first middle lateral grooves of Figure 2.
[Figure 4] a lateral cross-sectional view of the crown land region.
{ Figure 5 } an enlarged view of a second middle land region of Figure 1.
{ Figure 6 } an enlarged view of a first shoulder land region of Figure 1.
{ Figure 7 } an enlarged view of a second shoulder land region of Figure 1.
{ Figure 8 } an enlarged view of the crown land region and the first middle land region of Reference.

### [Mode for carrying out the disclosure]

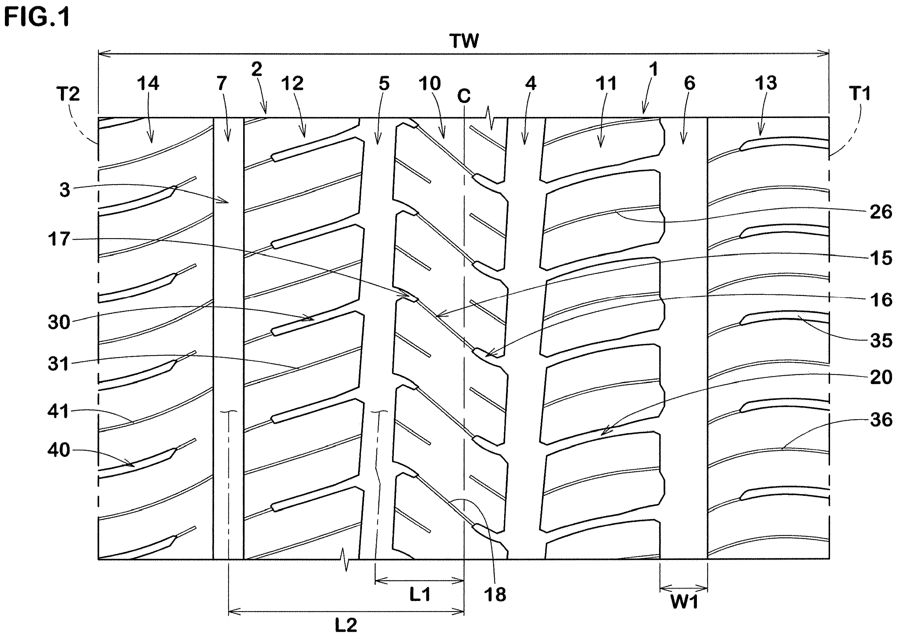

An embodiment of the present invention will now be described in conjunction with accompanying drawings. Figure 1 is a development view of a tread portion 2 of a tire 1 according to the present embodiment. As shown in Figure 1, the tire 1 of the present embodiment is used as a pneumatic tire for passenger cars intended for use in winter, for example. However, the tire 1 of the present invention is not limited to such an embodiment.

The tire 1 of the present embodiment has a tread portion 2 whose position when mounted on a vehicle is specified, for example. The mounting position on a vehicle is indicated by letters or marks on a sidewall portion (not shown), for example. The tread portion 2 is configured to have an asymmetric pattern (meaning that the tread pattern is not line-symmetric with respect to a tire equator (C)), for example.

The tread portion 2 includes a first tread edge T1 to be positioned on an inner side of the vehicle when mounted thereon, and a second tread edge T2 to be positioned on an outer side of the vehicle when mounted thereon. The first tread edge T1 and the second tread edge T2 are axially outermost ground contacting positions of a ground contacting surface of the tire 1 when the tire 1 in a standard state is in contact with a flat surface with zero camber angle by being loaded with a standard tire load.

The term "standard state" means a state in which the tire 1 is mounted on a standard rim (not shown), inflated to a standard inner pressure, and loaded with no tire load. In the case of tires for which various standards are not specified, or non-pneumatic tires, the above standard state means the standard operating state depending on the intended use of the tires loaded with no tire load. In the present specification, unless otherwise noted, the dimensions and the like of various parts of the tire are the values measured in the standard state described above.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" is an air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

The "standard tire load" is a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. Further, in the case of tires for which various standards are not specified, or non-pneumatic tires, the term "standard tire load" refers to the load applied to a single tire under a standard tire mounting condition. The "standard tire mounting condition" refers to a condition in which the tires are mounted on a standard vehicle according to the intended use of the tires and the vehicle is stationary on a flat road surface in a roadworthy condition.

The tread portion 2 includes a plurality of circumferential grooves 3 extending continuously in the tire circumferential direction between the first tread edge T1 and the second tread edge T2, and a plurality of land regions demarcated by the circumferential grooves 3. The tire 1 of the present embodiment is configured as a so-called 5-rib tire in which the tread portion 2 includes five land regions demarcated by four circumferential grooves 3. However, the present invention is not limited to such an embodiment, it can be a so-called four-rib tire in which the tread portion 2 has three circumferential grooves 3 and four land regions, for example.

The circumferential grooves 3 include a first crown circumferential groove 4, a second crown circumferential groove 5, a first shoulder circumferential groove 6, and a second shoulder circumferential groove 7, for example. The first crown circumferential groove 4 is arranged between the tire equator (C) and the first tread edge T1. The second crown circumferential groove 5 is arranged between the tire equator (C) and the second tread edge T2. The first shoulder circumferential groove 6 is arranged between the first crown circumferential groove 4 and the first tread edge T1. The second shoulder circumferential groove 7 is arranged between the second crown circumferential groove 5 and the second tread edge T2.

The circumferential grooves 3 can be various forms such as grooves extending linearly or in a zigzag manner in the tire circumferential direction.

A distance L1 in the tire axial direction from a groove centerline of the first crown circumferential groove 4 or the second crown circumferential groove 5 to the tire equator (C) is 5% or more and 15% or less of a tread width TW, for example. A distance L2 in the tire axial direction from a groove centerline of the first shoulder circumferential groove 6 or the second shoulder circumferential groove 7 to the tire equator (C) is 25% or more and 35% or less of the tread width TW, for example. The tread width TW is the distance in the tire axial direction from the first tread edge T1 to the second tread edge T2 in the standard state.

It is preferred that a groove width W1 of each of the circumferential grooves 3 is at least 3 mm or more. In a preferred embodiment, the groove width W1 of each of the circumferential grooves 3 is 3.0% or more and 7.0% or less of the tread width TW.

The land regions include at least a crown land region 10 and a first middle land region 11. The crown land region is demarcated between the first crown circumferential groove 4 and the second crown circumferential groove 5. The first middle land region 11 is demarcated between the first crown circumferential groove 4 and the first shoulder circumferential groove 6, and is adjacent to the crown land region 10 with the first crown circumferential groove 4 therebetween.

Further, in addition to these, the land regions of the present embodiment include a second middle land region 12, a first shoulder land region 13, and a second shoulder land region 14. The second middle land region 12 is demarcated between the second crown circumferential groove 5 and the second shoulder circumferential groove 7, and is adjacent to the crown land region 10 with the second crown circumferential groove 5 therebetween. The first shoulder land region 13 is demarcated axially outside the first shoulder circumferential groove 6 and includes the first tread edge T1. The second shoulder land region 14 is demarcated axially outside the second shoulder circumferential groove 7 and includes the second tread edge T2.

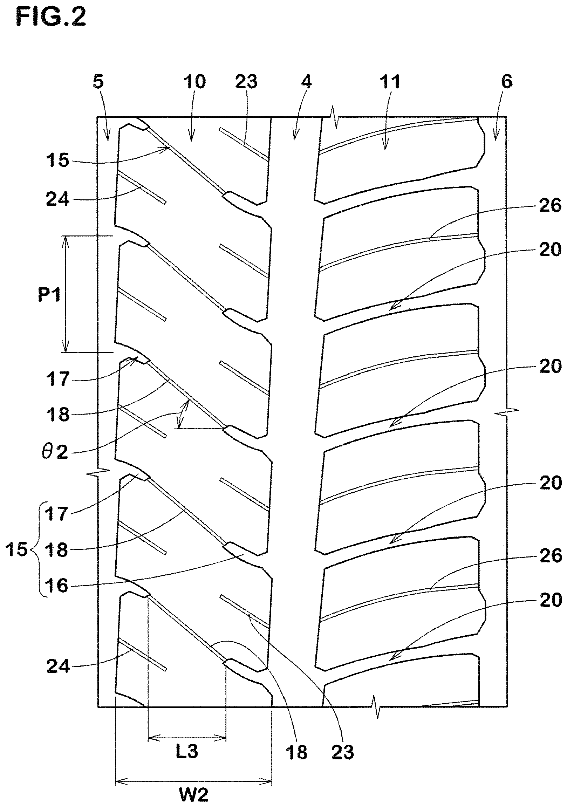

Figure 2 shows an enlarged view of the crown land region 10 and the first middle land region 11. As shown in Figure 2, the crown land region 10 is provided with a plurality of crown lateral grooves 15. Each of the crown lateral grooves 15 is inclined to a first side (down to the right in each Figure of the present specification) with respect to the tire axial direction and completely crosses the crown land region 10 in the tire axial direction. The first middle land region 11 is provided with a plurality of first middle lateral grooves 20. Each of the first middle lateral grooves 20 is inclined to a second side (up to the right in each Figures of the present specification), which is opposite to the first side, with respect to the tire axial direction and completely crosses the first middle land region 11 in the tire axial direction.

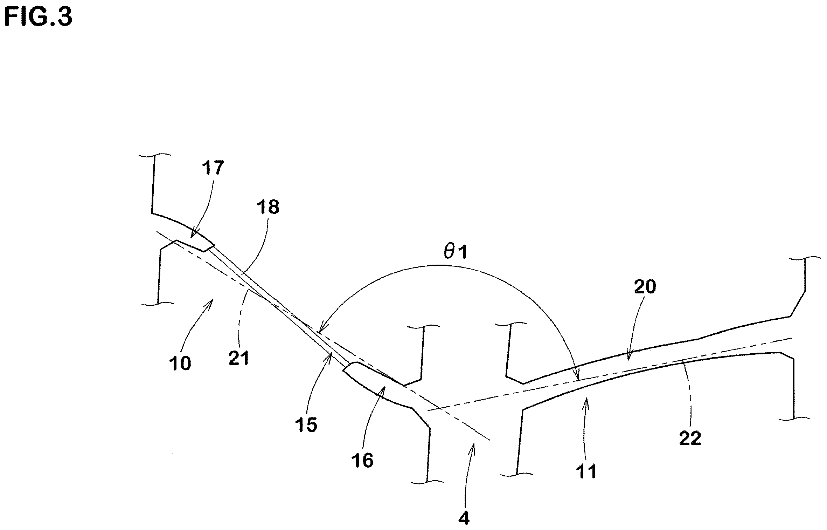

Figure 3 shows an enlarged view of one of the crown lateral grooves 15 and one of the first middle lateral grooves 20. As shown in Figure 3, in a tread plan view, an angle θ1 between a first linear line 21 connecting both ends of the crown lateral groove and a second linear line 22 connecting both ends of the first middle lateral grooves 20 is 90 degrees or more and 150 degrees or less.

Further, each of the crown lateral grooves 15 includes a first end portion 16 and a second end portion 17 in the tire axial direction, and a center portion 18 arranged between the first end portion 16 and the second end portion 17. In each of the crown lateral grooves 15, a groove width of the center portion 18 is smaller than a groove width of the first end portion 16 and a groove width of the second end portion 17. By adopting the above configuration, the tire 1 of the present invention can improve the noise performance while maintaining the on-snow performance. The following mechanisms can be inferred as reasons for this.

The crown lateral grooves 15 and the first middle lateral grooves 20 of the present invention are inclined to opposite sides to each other, therefore, a large snow shearing force is generated in multiple directions when running on snowy roads, thereby, the on-snow performance can be improved. In addition, in the present invention, the angle θ1 between the first linear line 21 and the second linear line 22 described above is defined as above, therefore it is possible that resonance of noise generated by the crown lateral grooves 15 and first middle lateral grooves 20 is suppressed while the on-snow performance is improved. In other words, the above-mentioned configuration can disperse the frequency band of the noise generated by the crown lateral grooves 15 and the first middle lateral grooves 20 to turn the noise into white noise.

Furthermore, each of the crown lateral grooves 15 includes the center portion 18 having a smaller groove width, therefore, the amount of air passing through each of the crown lateral grooves 15 can be decreased, thereby, the noise generated in the crown lateral grooves 15 is decreased. In addition, the resonance described above can be suppressed more effectively. It is inferred that the present invention can improve the noise performance while maintaining the on-snow performance through such mechanisms.

The more detailed configurations of the present embodiment will now be described below. It should be noted that each of the configurations described below represents a specific form of the present embodiment. Therefore, it goes without saying that the present invention can exert the above-mentioned effects even if it does not have the configurations described below. Further, even if any one of the configurations described below is applied alone to the tire of the present invention with the above-mentioned features, the performance can be expected to be improved according to each configuration. In addition, when some of the configurations described below are applied in combination, the combined performance improvement can be expected according to each of the applied configurations.

As shown in Figure 2, a maximum groove width of the center portion 18 of each of the crown lateral grooves 15 is 15% or less, and preferably 3% or more and 15% or less, of a maximum groove width of each of the first end portion 16 and the second end portion 17, for example. As a more preferred embodiment, the center portion 18 of each of the crown lateral grooves of the present embodiment is configured as a narrow groove portion having the groove width of 1.5 mm or less. Thereby, rigidity of the crown land region 10 can be maintained, therefore, the steering stability on dry roads (hereinafter may be referred to simply as "steering stability") is improved. In the following, unless otherwise noted, the term "narrow groove portion" refers to a portion of a groove where the groove width is 1.5 mm or less. Further, the term "narrow groove" refers to a groove having a groove width of 1.5 mm or less in its entirety. Furthermore, a groove not described as a narrow groove has a groove width greater than 1.5 mm. In each of the lateral grooves of the present embodiment, the portion not marked as a narrow groove portion has a groove width of 2.0 mm or more and 4.0 mm or less, for example.

Each of the center portions 18 crosses the center position in the tire axial direction of the crown land region, for example. Each of the center portions 18 has a length L3 of 40% or more and 60% or less of a width W2 in the ire axial direction of the crown land region 10, for example. The center portions 18 configured as such improve the on-snow performance and the noise performance in a good balance.

Each of the center portions 18 is inclined to the first side with respect to the tire axial direction. Each of the center portions 18 has an angle θ2 of 45 degrees or less, preferably 35 degrees or more and 45 degrees or less, with respect to the tire axial directions, for example.

Each of an axial length of each of the first end portions 16 and an axial length of each of the second end portions 17 is smaller than the axial length L3 of each of the center portions 18, and 20 % or more and 30% or less of the axial width W2 of the crown land region 10.

The first end portions and the second end portions are inclined to the first side with respect to the tire axial direction. Further, each of the first end portions 16 and the second end portions 17 has an angle with respect to the tire axial direction smaller than the angle θ2 of each of the center portions 18 with respect to the tire axial direction, for example, 10 degrees or more and-25degrees or less. Thereby, it is preferred that each of the crown lateral grooves 15 includes a portion consisting of the first end portion 16 and the center portion 18 and slightly convex toward one side in the tire circumferential direction, and a portion consisting of the second end portion 17 and the center portion 18 and slightly convex toward the other side in the tire circumferential direction. The crown lateral grooves 15 configured as such form hard snow blocks by the first end portion 16 and the second end portion 17 together with the circumferential grooves, and thus can improve traction performance on snow.

As shown in Figure 3, by the above configuration of the crown lateral grooves, an angle with respect to the tire axial direction of the first linear line 21 connecting both ends of each of the crown lateral grooves 15 is, for example, 45 degrees or less, and preferably 20 degrees or more and 40 degrees or less.

One pitch length P1 in the tire circumferential direction of the crown lateral grooves 15 is 60% or more and 90% or less of the width W2 in the tire axial direction of the crown land region 10, for example. Therefore, the on-snow performance and the noise performance are improved in a good balance.

Between two crown lateral grooves 15 adjacent to each other in the tire circumferential direction, a first crown narrow groove 23 and a second crown narrow groove 24 are provided. The first crown narrow groove 23 extends from the first crown circumferential groove 4 and terminates to have a closed end within the crown land region 10. The second crown narrow groove 24 extends from the second crown circumferential groove 5 and terminates to have a closed end within the crown land region 10.

The first crown narrow groove 23 has an axial length of 80% or more and 120% or less of an axial length of the first end portion 16 of each of the crown lateral grooves 15, for example. Further, the second crown narrow groove 24 terminates on the first crown circumferential groove 4 side of the second end portion 17 of each of the crown lateral grooves 15, for example. The first crown narrow grooves 23 and the second crown narrow grooves 24 configured as such disperse the frequency of noise generated when the crown land region 10 comes into contact with the ground, therefore, the noise performance is improved.

The first crown narrow grooves 23 and the second crown narrow grooves 24 are inclined to the first side with respect to the tire axial direction. An angle of each of the first crown narrow grooves 23 with respect to the tire axial direction and an angle of each of the second crown narrow grooves 24 with respect to the tire axial direction are each smaller than the angle of the center portion 18 of each of the crown lateral grooves 15 with respect to the tire axial direction. On the other hand, an angle difference between the angle of the first crown narrow groove 23 and the second crown narrow groove 24 and the angle of the center portion 18 is 15 degrees or less, and preferably 10 degrees or less, for example. Specifically, the first crown narrow grooves 23 and the second crown narrow grooves 24 are inclined at an angle of 30 degrees or more and 40 degrees or less with respect to the tire axial direction.

It is preferred that a rand ratio of the crown land region 10 is 65% or more and 75% or less. Therefore, the on-snow performance and the steering stability are improved in a good balance. It should be noted that in the present specification, the term "land ratio" of a land region refers to a ratio of the area of the actual ground contacting surface of the land region relative to the area of a virtual ground contacting surface obtained by filling all the grooves provided in the land region.

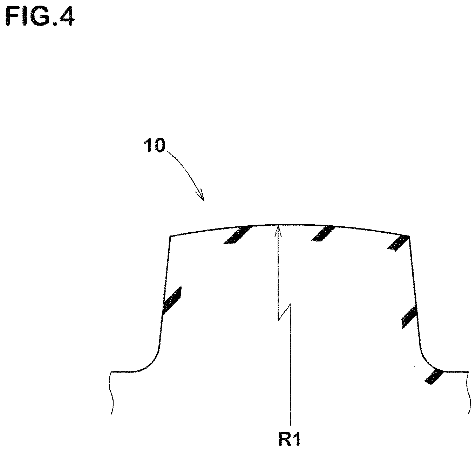

Figure 4 shows a lateral cross-sectional view of the crown land region 10. As shown in Figure 4, in a meridian section passing through a tire rotational axis of the tire in the standard state in which the tire is mounted on the standard rim, inflated to the standard inner pressure, and loaded with no tire load, a ground contacting surface of the crown land region 10 has a profile curved so as to be convex radially outwardly. Further, the profile of the ground contacting surface of the crown land region 10 has a radius of curvature R1 of 350 mm or more and 500 mm or less, for example. The crown land region 10 configured as such moderates ground contact pressure applied to longitudinal edges extending in the tire circumferential direction at the edges of the land region, and thus can improve the noise performance while maintaining the on-snow performance. It should be noted that it goes without saying that in Figure 4, the curvature of the aforementioned profile is depicted larger than the real one, so that the above-mentioned features can be easily understood.

As shown in Figure 3, each of the first middle lateral grooves is curved so as to be convex toward one side in the tire circumferential direction. However, in each of the first middle lateral grooves 20, the curvature of the first middle lateral groove 20 is slight, and a distance between a groove center line of the first middle lateral groove 20 and the second linear line 22 connecting both ends of the first middle lateral groove 20 is smaller than a groove width of the first middle lateral groove 20. Further, in each of the first middle lateral grooves 20, a center portion in a longitudinal direction thereof has a groove width smaller than each of groove widths of both end portions. In the first middle lateral grooves 20 configured as such, the groove shapes easily deform according to changes in the ground contact pressure applied to the grooves, therefore, snow can be compressed hard in the grooves as well as clogging of snow in the grooves can be suppressed.

The first middle lateral grooves 20 are arranged at an angle different from an angle of the crown lateral grooves 15 with respect to the tire axial direction. Thereby, resonance of the noise generated by each of the lateral grooves can be surely prevented. In the present embodiment, the second linear line 22 has an angle with respect to the tire axial direction smaller than an angle of the first linear line 21 with respect to the tire axial direction. The angle of the second linear line 22 with respect to the tire axial direction is 5 degrees or more and 25 degrees or less, for example. The first middle lateral grooves 20 configured as such are helpful for further improving the noise performance.

In the present embodiment, each of the crown lateral grooves 15 and a respective one of the first middle lateral grooves 20 are adjacent to each other in the tire axial direction, so that each of the first linear lines 21 and a respective one of the second linear lines 22 intersect in the first crown circumferential groove 4 arranged between the crown land region 10 and the first middle land region 11 in the tread plan view. In a more preferred embodiment, in a pair of the crown lateral groove 15 and the first middle lateral groove 20 adjacent to each other, an area obtained by projecting a connection portion between the crown lateral groove 15 and the first crown circumferential groove 4 parallel to the tire axial direction overlaps with a connection portion between the first middle lateral groove 20 and the first crown circumferential groove 4. In a more desirable form, as shown in Figure 2, each pair of the crown lateral groove 15 and the first middle lateral groove 20 adjacent to each other in the tire circumferential direction is arranged according to the relationship described above. As a result, the crown lateral grooves 15 and the first middle lateral grooves 20 can form hard snow blocks in the connection portions with the first crown circumferential groove 4, therefore, excellent on-snow performance can be exerted.

The first middle land region 11 of the present embodiment is provided with a plurality of first middle narrow grooves 26. Each of the first middle narrow grooves 26 completely crosses the first middle land region 11 in the tire axial direction and the first middle narrow grooves 26 and the first middle lateral grooves 20 are arranged alternately one by one in the tire circumferential direction.

The first middle narrow grooves 26 are inclined to the second side with respect to the tire axial direction, for example. Each of the first middle lateral grooves 20 of the present embodiment extends along a respective one of the first middle lateral grooves 20, and an angle difference between these grooves is set to be 5 degrees or less. Further, the first middle narrow grooves 26 are arranged at an angle smaller than the first crown narrow grooves 23 and the second crown narrow grooves 24 with respect to the tire axial direction. Specifically, the angle of each of the first middle narrow grooves 26 with respect to the tire axial direction is 5 degrees or more and 25 degrees or less.

The first middle land region 11 has the land ratio of 65% or more and 75% or less, for example. In a preferred embodiment, the land ratio of the first middle land region 11 is greater than the land ratio of the crown land region 10. Thereby, the steering stability is improved while the on-snow performance is maintained.

The ground contacting surface of the first middle land region 11 has a profile curved so as to be convex radially outward, similar to the ground contacting surface of the crown land region 10 shown in Figure 4. It is preferred that a radius of curvature of the ground contacting surface of the first middle land region 11 is smaller than the radius of curvature of the ground contacting surface of the crown land region 10, and for example, 250 mm or more and 300 mm or less. The first middle land region 11 configured as such moderates the ground contact pressure applied to the longitudinal edges thereof and thus can improve the noise performance while maintaining the on-snow performance.

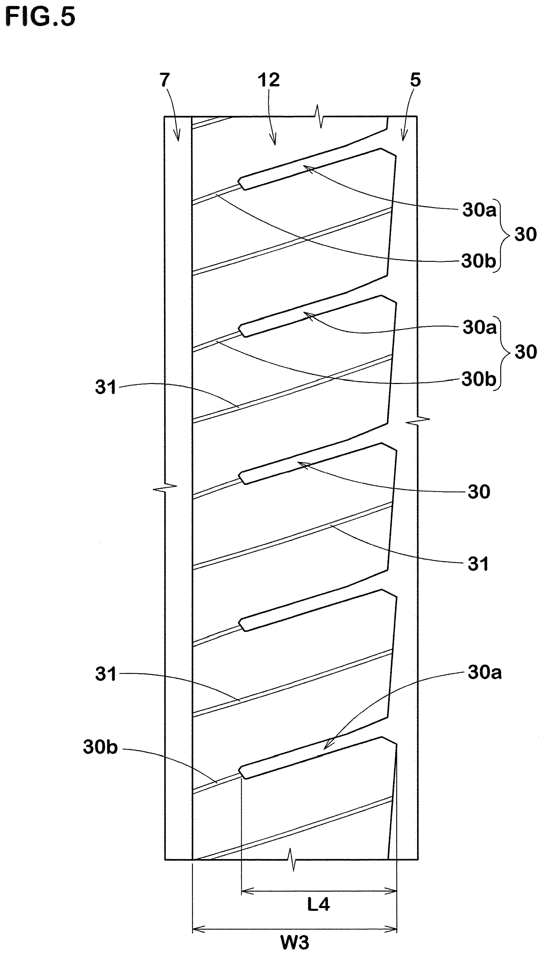

Figure 5 shows an enlarged view of the second middle land region 12. As shown in Figure 5, the second middle land region 12 is provided with a plurality of second middle lateral grooves 30 and second middle narrow grooves 31 arranged alternately one by one in tire circumferential direction.

The second middle lateral grooves 30 are inclined to the second side with respect to the tire axial direction and each completely crosses the second middle land region 12 in the tire axial direction, for example. It is preferred that the second middle lateral grooves are arranged at an angle with respect to the tire axial direction smaller than the center portions 18 of the crown lateral grooves 15 (shown in Figure 2). The angle of each of the second middle lateral grooves 30 with respect to the tire axial direction is 15 degrees or more and 25 degrees or less, for example. Thereby, the resonance of the noise generated by the second middle lateral grooves 30 and the crown lateral grooves 15 can be suppressed.

Each of the second middle lateral grooves 30 includes an inner groove portion (30a) extending from the second crown circumferential groove 5, and an outer narrow groove portion (30b) extending from an axially outer end of the inner groove portion (30a) to the second shoulder circumferential groove 7, for example.

The inner groove portion (30a) crosses a center position in the tire axial direction of the second middle land region 12, for example. The inner groove portion (30a) has a length L4 in the tire axial direction of 60% or more and 90% or less of a width W3 in the tire axial direction of the second middle land region 12, for example. The inner groove portions (30a) configured as such improve the on-snow performance and the steering stability in a good balance.

In the present embodiment, it is preferred that a projected area obtained by extending each of the inner groove portions (30a) along a longitudinal direction thereof overlaps the connection portion between the second crown circumferential groove 5 and a respective one of the crown lateral grooves 15 (shown in Figure 2). Therefore, the on-snow performance is further improved.

The outer narrow groove portion (30b) is inclined to the second side and extends linearly from the inner groove portion (30a) to the second shoulder circumferential groove 7, for example.

Each of the second middle narrow grooves 31 is inclined to the second side with respect to the tire axial direction and completely crosses the second middle land region 12 in the tire axial direction, for example. Each of the second middle narrow grooves 31 of the present embodiment extends along a respective one of the second middle lateral grooves 30, and an angle difference between them is set to be 5 degrees or less, for example. The second middle narrow grooves configured as such can improve the on-snow performance while suppressing uneven wear in the second middle land region 12.

The second middle lateral grooves 30 has the land ratio of 65% or more and 75% or less, for example. In a preferred embodiment, the land ratio of the first middle land region 11 is greater than the land ratio of the crown land region 10. Further, the ground contacting surface of the second middle land region 12 has a profile curved so as to be convex outward in the tire radial direction, similar to the ground contacting surface of the crown land region 10 shown in Figure 4. A radius of curvature of the ground contacting surface of the second middle land region 12 is the same as that of the first middle land region 11, and for example, 250 mm or more and 300 mm or less.

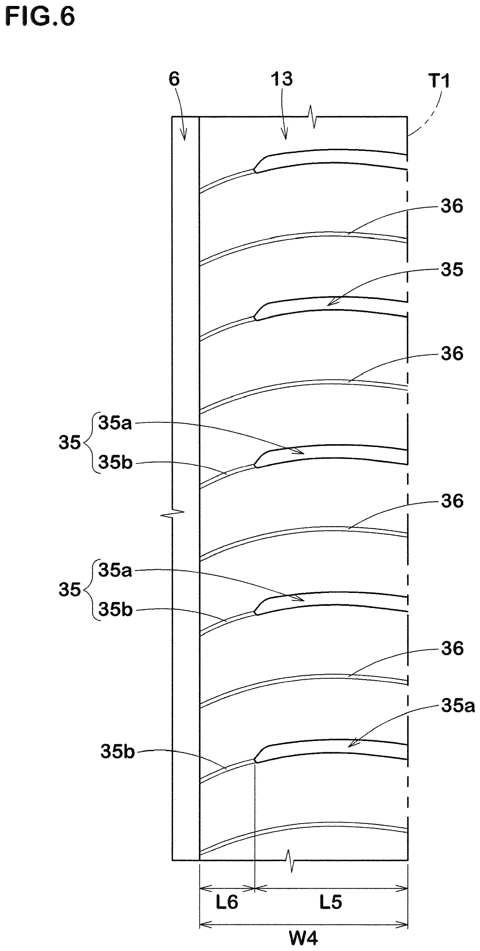

Figure 6 shows an enlarged view of the first shoulder land region 13. As shown in Figure 6, the first shoulder land region 13 is provided with first shoulder lateral grooves 35 and first shoulder narrow grooves 36 arranged alternately one by one in the tire circumferential direction.

Each of the first shoulder lateral grooves extends at least from the first tread edge T1 to the first shoulder circumferential groove 6, for example. Each of the first shoulder lateral grooves 35 are curved so as to be convex toward one side in the tire circumferential direction, for example.

Each of the first shoulder lateral grooves 35 includes a main body portion (35a) arranged on the first tread edge T1 side and an inner end portion (35b) extending from an axially inner end of the main body portion (35a) to the first shoulder circumferential groove 6.

The main body portion (35a) of each of the first shoulder lateral grooves 35 crosses a center position in the tire axial direction of the first shoulder land region 13, for example. The main body portion (35a) has a length L5 in the tire axial direction of 60% or more and 80% or less of a width W4 in the tire axial direction of the first shoulder land region 13, for example. Thereby, the on-snow performance and the noise performance are improved in a good balance.

The inner end portion (35b) has a groove width smaller than a groove width of the main body portion (35a) of each of the first shoulder lateral grooves 35. It is preferred that the groove width of the inner end portion (35b) is 3% or more and 15% or less of the groove width of the main body portion (35a). The inner end portion (35b) of each of the first shoulder lateral grooves 35 of the present embodiment is configured as a narrow groove portion having a groove width of 1.5 mm or less. Therefore, the amount of air passing through the first shoulder lateral grooves 35 is decreased, thereby, the noise performance is improved.

It is preferred that a length L6 in the tire axial direction of the inner end portion (35b) of each of the first shoulder lateral grooves 35 is smaller than the length L3 in the tire axial direction of the center portion 18 of each of the crown lateral grooves 15 (shown in Figure 2). Specifically, the length L6 of the inner end portion (35b) is 40% or more and 60% or less of the length L3 of the center portion 18. Thereby, it is possible that the resonance of the noise generated in the crown lateral grooves 15 and the first shoulder lateral grooves 35 is suppressed.

Each of the first shoulder narrow grooves 36 completely crosses the first shoulder land region 13 in the tire axial direction, for example. Each of the first shoulder narrow grooves 36 of the present embodiment is curved so as to be convex to one side in the tire circumferential direction. In a more preferred embodiment, the first shoulder narrow grooves 36 and the first shoulder lateral grooves 35 extend along each other, and an angle difference between them is set to be 5 degrees or less. The first shoulder narrow grooves 36 configured as such can improve the on-snow performance while suppressing the uneven wear in the first shoulder land region 13.

It is preferred that the land ratio of the first shoulder land region 13 is greater than the land ratio of the crown land region 10. Specifically, the land ratio of the first shoulder land region is 75% or more and 85% or less. The first shoulder land region 13 configured as such is helpful for improving the steering stability on dry road surfaces.

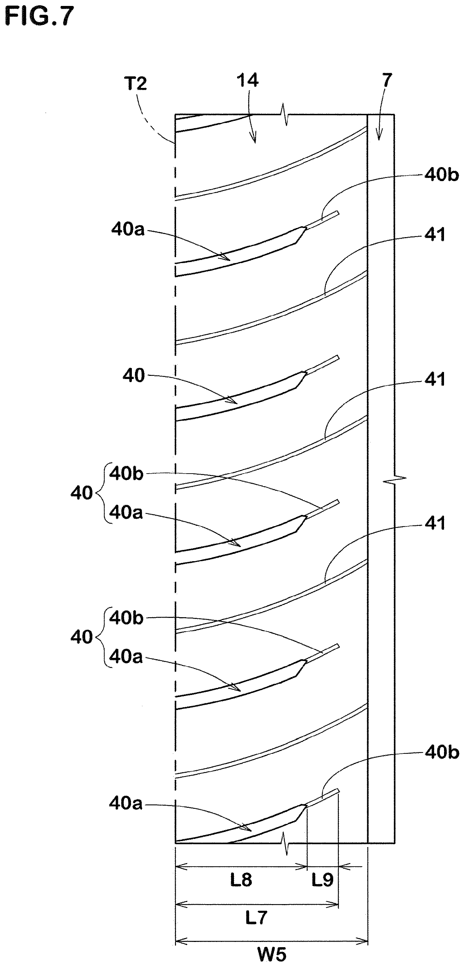

Figure 7 shows an enlarged view of the second shoulder land region 14. As shown in Figure 7, the second shoulder land region 14 is provided with second shoulder lateral grooves 40 and second shoulder narrow grooves 41 arranged alternately one by one in tire circumferential direction.

Each of the second shoulder lateral grooves 40 at least extends axially inward from the second tread edge T2 and terminates to have a closed end within the second shoulder land region 14, for example. Each of the second shoulder lateral grooves 40 has an axial length L7 of 75% or more and 90% or less of a width W5 in the tire axial direction of the second shoulder land region 14, for example. Therefore, it is possible that deterioration of the noise performance is suppressed, the deterioration being caused by air escaping from the second shoulder circumferential groove 7 toward the second tread edge T2.

Each of the second shoulder lateral grooves 40 includes a main body portion (40a) arranged on the second tread edge T2 side and an inner end portion (40b) connected with the main body portion (40a) on the axially inner side thereof and having a groove width smaller than the main body portion (40a).

The main body portion (40a) of each of the second shoulder lateral grooves 40 crosses a center position in the tire axial direction of the second shoulder land region 14, for example. The main body portion (40a) has an axial length L8 of 60% or less and 70% or more of the width W5 in the tire axial direction of the second shoulder land region 14, for example. Therefore, the on-snow performance and the noise performance are improved in a good balance.

In each of the second shoulder lateral grooves 40, the inner end portion (40b) extends from the main body portion (40a) and terminates to have a closed end within the second shoulder land region 14. The inner end portion (40b) has an axial length L9 of 15% or more and 25% or less of the width W5 in the tire axial direction of the second shoulder land region 14, for example. In a more preferred embodiment, the length L9 of the inner end portion (40b) is smaller than the length L3 in the tire axial direction of the center portion 18 of each of the crown lateral grooves 15. Thereby, resonance of the noise generated by each of the lateral grooves can be suppressed.

In each of the second shoulder lateral grooves 40, the inner end portion (40b) has a groove width of 3% or more and 15% or less of a groove width of the main body portion (40a). The inner end portion (40b) of each of the second shoulder lateral grooves 40 in the present embodiment is configured as a narrow groove portion having a groove width of 1.5 mm or less. Thereby, excellent steering stability can be obtained.

Each of the second shoulder narrow grooves 41 completely crosses the second shoulder land region 14 in the tire axial direction, for example. In the present embodiment, the second shoulder narrow grooves 41 and the second shoulder lateral grooves 40 extend along each other, and an angle difference between them is set to be 5 degrees or less.

It is preferred that the second shoulder land region 14 has a land ratio larger than the land ratio of the crown land region 10. Specifically, the land ratio of the second shoulder land region is 75% or more and 85% or less. The second shoulder land region 14 configured as such is helpful for improving the on-snow performance and the noise performance in a good balance.

While detailed description has been made of an embodiment of the present invention, the present invention can be embodied in various forms without being limited to the above-illustrated specific embodiment but only by the appended claims.

### [Examples]

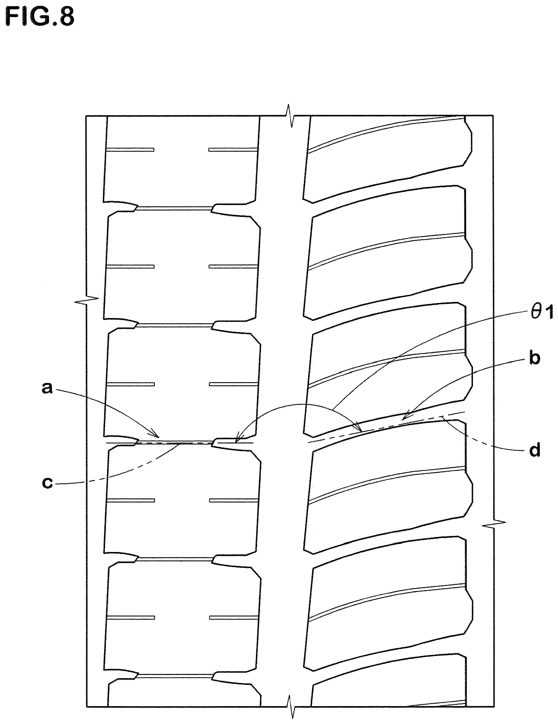

Tires of size 225/65R17 having the pattern shown in Figure 1 were made by way of test according to the specifications listed in Table 1. As Reference, tires having the crown land region shown in Figure 8 were made by way of test. As shown in Figure 8, in each of the tires in Reference, each of crown lateral grooves (a) extends along the tire axial direction, and the angle θ1 between a first linear line (c) connecting both ends of each of the crown lateral grooves (a) and a second linear line (d) connecting both ends of a respective one of first middle lateral grooves (b) is set to be 175 degrees. Each of the tires in the Reference has substantially the same pattern as that shown in Figure 1, except for the configuration described above. Each of the test tires was tested for the on-snow performance and the noise performance. Common specifications of the test tires and the test methods were as follows.
Tire rim: 17x7.0JJ
Tire inner pressure: 230 kPa (front wheels), 210 kPa (rear wheels)
Test vehicle: displacement of 2000 cc, 4WD-car
Tire mounting position: all wheels

### < On-snow Performance >

A coefficient of friction was measured when each of the test tires was run on an inside drum testing machine having snow therein and accelerated from 8 km/h to 35 km/h. The test results are indicated by an index based on the coefficient of friction of the Reference being 100, wherein the larger the numerical value, the better the on-snow performance is.

### < Noise Performance >

While a driver drove the above test vehicle on a dry road surface, the noise performance was evaluated by the driver's senses. The results are indicated by an evaluation point based on the Reference being 100, wherein the larger the numerical value, the better the noise performance is.

The test results are shown in Table 1.

**Table 1**

| | | Ref.1 | Ex.1 | Ex.2 | Ex.3 | Ex.4 | Ex.5 | Ex.6 | Ex.7 | Ex.8 | Ex.9 | Ex.10 | Ex.11 |
|---|---|---|---|---|---|---|---|---|---|---|---|---|---|
| Figure showing Crown land region and First middle land region | | Fig.8 | Fig.2 | Fig.2 | Fig.2 | Fig.2 | Fig.2 | Fig.2 | Fig.2 | Fig.2 | Fig.2 | Fig.2 | Fig.2 |
| Angle θ1 between First linear line and Second linear line | [degree] | 175 | 130 | 90 | 100 | 110 | 120 | 140 | 150 | 130 | 130 | 130 | 130 |
| Groove width of Center portion/ Groove width of First and Second end portions | [%] | 15 | 15 | 15 | 15 | 15 | 15 | 15 | 15 | 5 | 10 | 20 | 25 |
| On-snow performance | [index] | 100 | 103 | 100 | 101 | 102 | 103 | 102 | 101 | 101 | 102 | 103 | 104 |
| Noise performance | [evaluation point] | 100 | 110 | 111 | 111 | 110 | 110 | 108 | 104 | 110 | 110 | 108 | 106 |

As shown in Table 1, it was confirmed that the tires in Examples improved the noise performance while maintaining the on-snow performance.

### [Description of Reference Signs]

- 2: tread portion
- 3: circumferential groove
- 10: crown land region
- 11: first middle land region
- 15: crown lateral groove
- 16: first end portion
- 17: second end portion
- 18: center portion
- 20: first middle lateral groove
- 21: first linear line
- 22: second linear line
- T1: first tread edge
- T2: second tread edge

## Claims

1. A tire (1) comprising a tread portion (2), wherein
the tread portion (1) includes a plurality of circumferential grooves (3) extending continuously in a tire circumferential direction between a first tread edge (T1) and a second tread edge (T2), and a plurality of land regions demarcated by the circumferential grooves (3),
the land regions include a crown land region (10) and a first middle land region (11) adjacent to the crown land region (10) on the first tread edge (T1) side with one of the circumferential grooves (3) therebetween,
the crown land region (10) is provided with a plurality of crown lateral grooves (15) inclined to a first side with respect to a tire axial direction and completely cross the crown land region (10) in the tire axial direction,
the first middle land region (11) is provided with a plurality of first middle lateral grooves (20) inclined to a second side opposite to the first side with respect to the tire axial direction and completely cross the first middle land region (11) in the tire axial direction,
in a tread plan view, an angle (θ1) between a first linear line (21) connecting both ends of each of the crown lateral grooves (15) and a second linear line (22) connecting both ends of a respective one of the first middle lateral grooves (20) is 90 degrees or more and 150 degrees or less,
each of the crown lateral grooves (15) includes a first end portion (16) and a second end portion (17) in the tire axial direction, and a center portion (18) arranged between the first end portion (16) and the second end portion (17), and
the center portion (18) has a groove width smaller than a groove width of the first end portion (16) and a groove width of the second end portion (17); wherein the tread portion (2) includes a first shoulder land region (13) including the first tread edge (1) and a second shoulder land region (14) including the second tread edge (T2),
**characterized in that**
the second shoulder land region (14) is provided with second shoulder lateral grooves (40) at least extending axially inward from the second tread edge (T2) and terminating to have closed ends within the second shoulder land region (14);
each of the second shoulder lateral grooves (40) includes a main body portion (40a) arranged on the second tread edge (T2) side and an inner end portion (40b) connected with the main body portion (40a) on an axially inner side thereof and having a groove width smaller than a groove width of the main body portion (40a); and the groove width of the inner end portion (40b) is 3% or more and 15% or less of the groove width of the main body portion (40a).

2. The tire according to claim 1, wherein a maximum groove width of the center portion (18) is 15% or less of a maximum groove width of the first end portion (16) and a maximum groove width of the second end portion (17).

3. The tire according to claim 1 or 2, wherein
the tread portion (2) has a specified position when mounted on a vehicle, and
the first tread edge (T1) is positioned on an inner side of the vehicle when mounted thereon.

4. The tire according to any one of claims 1 to 3, wherein the second linear line (22) has an angle with respect to the tire axial direction smaller than an angle of the first linear line (21) with respect to the tire axial direction.

5. The tire according to any one of claims 1 to 4, wherein each of the crown lateral grooves (15) and a respective one of the first middle lateral grooves (20) are adjacent to each other in the tire axial direction, so that, in the tread plan view, each of the first linear lines (21) and a respective one of the second linear lines (22) intersect in one of the circumferential grooves (3) arranged between the crown land region (10) and the first middle land region (11).

6. The tire according to any one of claims 1 to 5, wherein in a meridian section passing through a tire rotational axis of the tire in a standard state in which the tire is mounted on a standard rim, inflated to a standard inner pressure, and loaded with no tire load, each of a ground contacting surface of the crown land region (10) and a ground contacting surface of the first middle land region (11) has a profile curved so as to be convex outward in a tire radial direction.

7. The tire according to any one of claims 1 to 6, wherein the crown land region (10) had a land ratio of 65% or more and 75% or less.

8. The tire according to any one of claims 1 to 7, wherein
the first middle land region (11) has a land ratio greater than a land ratio of the crown land region (10).

9. The tire according to any one of claims 1 to 8, wherein
the first shoulder land region (13) has a land ratio of 75% or more and 85% or less.

## Patentansprüche

1. Reifen (1) mit einem Laufflächenabschnitt (2), wobei
der Laufflächenabschnitt (1) eine Vielzahl von Umfangsrillen (3), die sich kontinuierlich in einer Reifenumfangsrichtung zwischen einer ersten Laufflächenkante (T1) und einer zweiten Laufflächenkante (T2) erstrecken, und eine Vielzahl von Landbereichen, die durch die Umfangsrillen (3) abgegrenzt sind, umfasst,
die Landbereiche einen Kronenlandbereich (10) und einen ersten mittleren Landbereich (11) umfassen, der zu dem Kronenlandbereich (10) auf der Seite der ersten Laufflächenkante (T1) benachbart ist, wobei sich eine der Umfangsrillen (3) dazwischen befindet,
der Kronenlandbereich (10) mit einer Vielzahl von Kronenquerrillen (15) versehen ist, die zu einer ersten Seite in Bezug auf eine Reifenaxialrichtung geneigt sind und den Kronenlandbereich (10) in der Reifenaxialrichtung vollständig durchqueren,
der erste mittlere Landbereich (11) mit einer Vielzahl von ersten mittleren Querrillen (20) versehen ist, die zu einer zweiten Seite gegenüber der ersten Seite in Bezug auf die Reifenaxialrichtung geneigt sind und den ersten mittleren Landbereich (11) in der Reifenaxialrichtung vollständig durchqueren,
in einer Draufsicht auf die Lauffläche ein Winkel (θ1) zwischen einer ersten geraden Linie (21), die beide Enden jeder der Kronenquerrillen (15) verbindet, und einer zweiten geraden Linie (22), die beide Enden einer entsprechenden der ersten mittleren Querrillen (20) verbindet, 90 Grad oder mehr und 150 Grad oder weniger beträgt,
jede der Kronenquerrillen (15) einen ersten Endabschnitt (16) und einen zweiten Endabschnitt (17) in der Reifenaxialrichtung und einen Mittelabschnitt (18) umfasst, der zwischen dem ersten Endabschnitt (16) und dem zweiten Endabschnitt (17) angeordnet ist, und
der Mittelabschnitt (18) eine Rillenbreite aufweist, die kleiner ist als eine Rillenbreite des ersten Endabschnitts (16) und eine Rillenbreite des zweiten Endabschnitts (17); wobei der Laufflächenabschnitt (2) einen ersten Schulterlandbereich (13), der die erste Laufflächenkante (1) enthält, und einen zweiten Schulterlandbereich (14), der die zweite Laufflächenkante (T2) enthält, umfasst,
**dadurch gekennzeichnet, dass**
der zweite Schulterlandbereich (14) mit zweiten Schulterquerrillen (40) versehen ist, die sich zumindest axial innen von der zweiten Laufflächenkante (T2) erstrecken und so enden, dass sie innerhalb des zweiten Schulterlandbereichs (14) geschlossene Enden aufweisen;
jede der zweiten Schulterquerrillen (40) einen Hauptkörperabschnitt (40a), der auf der Seite der zweiten Laufflächenkante (T2) angeordnet ist, und einen inneren Endabschnitt (40b) umfasst, der mit dem Hauptkörperabschnitt (40a) auf einer axial inneren Seite desselben verbunden ist und eine Rillenbreite aufweist, die kleiner als eine Rillenbreite des Hauptkörperabschnitts (40a) ist; und die Rillenbreite des inneren Endabschnitts (40b) 3 % oder mehr und 15 % oder weniger der Rillenbreite des Hauptkörperabschnitts (40a) beträgt.

2. Reifen nach Anspruch 1, wobei eine maximale Rillenbreite des Mittelabschnitts (18) 15% oder weniger einer maximalen Rillenbreite des ersten Endabschnitts (16) und einer maximalen Rillenbreite des zweiten Endabschnitts (17) beträgt.

3. Reifen nach Anspruch 1 oder 2, wobei
der Laufflächenabschnitt (2) eine bestimmte Position hat, wenn er an einem Fahrzeug montiert ist, und
die erste Laufflächenkante (T1) auf einer Innenseite des Fahrzeugs angeordnet ist, wenn er daran montiert ist.

4. Reifen nach einem der Ansprüche 1 bis 3, wobei die zweite gerade Linie (22) einen Winkel in Bezug auf die Reifenaxialrichtung aufweist, der kleiner als der Winkel der ersten geraden Linie (21) in Bezug auf die Reifenaxialrichtung ist.

5. Reifen nach einem der Ansprüche 1 bis 4, wobei jede der Kronenquerrillen (15) und eine jeweilige der ersten mittleren Querrillen (20) in der Reifenaxialrichtung benachbart zueinander sind, so dass sich in der Laufflächen-Draufsicht jede der ersten geraden Linien (21) und eine jeweilige der zweiten geraden Linien (22) in einer der zwischen dem Kronenlandbereich (10) und dem ersten mittleren Landbereich (11) angeordneten Umfangsrillen (3) schneiden.

6. Reifen nach einem der Ansprüche 1 bis 5, wobei in einem Meridianquerschnitt, der durch eine Reifendrehachse des Reifens in einem Standardzustand verläuft, in dem der Reifen auf eine Standardfelge aufgezogen, auf einen Standardinnendruck aufgepumpt und mit keiner Reifenlast belastet ist, sowohl eine Bodenkontaktfläche des Kronenlandbereichs (10) als auch eine Bodenkontaktfläche des ersten mittleren Landbereichs (11) ein Profil aufweist, das so gekrümmt ist, dass es in einer Reifenradialrichtung nach außen konvex ist.

7. Reifen nach einem der Ansprüche 1 bis 6, wobei der Kronenlandbereich (10) ein Landverhältnis von 65% oder mehr und 75% oder weniger aufweist.

8. Reifen nach einem der Ansprüche 1 bis 7, wobei der erste mittlere Landbereich (11) ein Landverhältnis aufweist, das größer als ein Landverhältnis des Kronenlandbereichs (10) ist.

9. Reifen nach einem der Ansprüche 1 bis 8, wobei der erste Schulterlandbereich (13) ein Landverhältnis von 75 % oder mehr und 85 % oder weniger aufweist.

## Revendications

1. Pneumatique (1) comprenant une portion formant bande de roulement (2), dans lequel
la portion formant bande de roulement (1) inclut une pluralité de rainures circonférentielles (3) s'étendant en continu dans une direction circonférentielle du pneumatique entre un premier bord de bande de roulement (T1) et un second bord de bande de roulement (T2), , et une pluralité de régions en relief délimitées par les rainures circonférentielles (3),
les régions en relief incluent une région en relief de couronne (10) et une première région en relief médiane (11) adjacente à la région en relief de couronne (10) sur le côté du premier bord de bande de roulement (T1) avec une des rainures circonférentielles (3) entre celles-ci,
la région en relief de couronne (10) est dotée d'une pluralité de rainures latérales de couronne (15) inclinées vers un premier côté par rapport à une direction axiale du pneumatique et traversant complètement la région en relief de couronne (10) dans la direction axiale du pneumatique,
la première région en relief médiane (11) est dotée d'une pluralité de premières rainures latérales médianes (20) inclinées vers un second côté opposé au premier côté par rapport à la direction axiale du pneumatique et traversant complètement la première région en relief médiane (11) dans la direction axiale du pneumatique,
dans une vue en plan de bande de roulement, un angle (θ1) entre une première ligne linéaire (21) connectant les deux extrémités de chacune des rainures latérales de couronne (15) et une seconde ligne linéaire (22) connectant les deux extrémités d'une rainure respective des premières rainures latérales médianes (20) est de 90 degrés ou plus et de 150 degrés ou moins,
chacune des rainures latérales de couronne (15) inclut une première portion d'extrémité (16) et une seconde portion d'extrémité (17) dans la direction axiale du pneumatique, et une portion centrale (18) agencée entre la première portion d'extrémité (16) et la seconde portion d'extrémité (17), et
la portion centrale (18) a une largeur de rainure plus petite qu'une largeur de rainure de la première portion d'extrémité (16) et qu'une largeur de rainure de la seconde portion d'extrémité (17) ; dans lequel
la portion formant bande de roulement (2) inclut une première région en relief d'épaulement (13) incluant le premier bord de bande de roulement (T1) et une seconde région en relief d'épaulement (14) incluant le second bord de bande de roulement (T2),
**caractérisé en ce que**
la seconde région en relief d'épaulement (14) est dotée de secondes rainures latérales d'épaulement (40) s'étendant au moins axialement vers l'intérieur depuis le second bord de bande de roulement (T2) et se terminant pour avoir des extrémités fermées à l'intérieur de la seconde région en relief d'épaulement (14) ;
chacune des secondes rainures latérales d'épaulement (40) inclut une portion formant corps principal (40a) agencée sur le côté du second bord de bande de roulement (T2) et une portion d'extrémité intérieure (40b) connectée à la portion formant corps principal (40a) sur un côté axialement intérieur de celle-ci et ayant une largeur de rainure plus petite qu'une largeur de rainure de la portion formant corps principal (40a) ; et la largeur de rainure de la portion d'extrémité intérieure (40b) est de 3 % ou plus et de 15 % ou moins de la largeur de rainure de la portion formant corps principal (40a).

2. Pneumatique selon la revendication 1, dans lequel une largeur de rainure maximum de la portion centrale (18) est de 15 % ou moins d'une largeur de rainure maximum de la première portion d'extrémité (16) et d'une largeur de rainure maximum de la seconde portion d'extrémité (17).

3. Pneumatique selon la revendication 1 ou 2, dans lequel
la portion formant bande de roulement (2) a une position spécifiée quand le pneumatique est monté sur un véhicule, et
le premier bord de bande de roulement (T1) est positionné sur un côté intérieur du véhicule quand le pneumatique est monté sur celui-ci.

4. Pneumatique selon l'une quelconque des revendications 1 à 3, dans lequel la seconde ligne linéaire (22) a un angle par rapport à la direction axiale du pneumatique plus petit qu'un angle de la première ligne linéaire (21) par rapport à la direction axiale du pneumatique.

5. Pneumatique selon l'une quelconque des revendications 1 à 4, dans lequel chacune des rainures latérales de couronne (15) et une rainure respective des premières rainures latérales médianes (20) sont adjacentes l'une à l'autre dans la direction axiale du pneumatique, de telle sorte que, dans la vue en plan de la bande de roulement, chacune des premières lignes linéaires (21) et une ligne respective des secondes lignes linéaires (22) se recoupent dans une des rainures circonférentielles (3) agencée entre la région en relief de couronne (10) et la première région relief médiane (11).

6. Pneumatique selon l'une quelconque des revendications 1 à 5, dans lequel, dans une section méridienne passant à travers un axe de rotation de pneumatique du pneumatique dans un état standard dans lequel le pneumatique est monté sur une jante standard, gonflé à une pression interne standard et chargé d'aucune charge de pneumatique, chacune d'une surface de contact au sol de la région en relief de couronne (10) et d'une surface de contact au sol de la première région relief médiane (11) a un profil incurvé de manière à être convexe vers l'extérieur dans une direction radiale du pneumatique.

7. Pneumatique selon l'une quelconque des revendications 1 à 6, dans lequel la région en relief de couronne (10) a un rapport de relief de 65 % ou plus et de 75 % ou moins.

8. Pneumatique selon l'une quelconque des revendications 1 à 7, dans lequel la première région en relief médiane (11) a un rapport de relief plus grand qu'un rapport de relief de la région en relief de couronne (10).

9. Pneumatique selon l'une quelconque des revendications 1 à 8, dans lequel la première région en relief d'épaulement (13) a un rapport de relief de 75 % ou plus et de 85 % ou moins.
